# EUROPEAN PATENT APPLICATION

(11) **EP 4 693 640 A1**
(43) Date of publication of application: **11.02.2026**
(21) Application number: 24892585.1
(22) Date of filing: 19.01.2024
(51) Int. Cl.: H01M 50/159

(54) **END COVER, BATTERY CELL, BATTERY, AND ELECTRIC DEVICE**

(30) Priority: 21.11.2023 CN 202323135865 U
(71) Applicant: Contemporary Amperex Technology Co., Limited, Ningde, Fujian 352100 (CN)
(72) Inventor: SU, Huasheng, Ningde, Fujian 352100 (CN); LI, Can, Ningde, Fujian 352100 (CN); ZHENG, Yulian, Ningde, Fujian 352100 (CN); YANG, Rui, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2024/073250
(87) International publication number: WO 2025/107416

(57) **Abstract**

The present application discloses an end cover, a battery cell, a battery, and an electric device. The end cover comprises: a cover body, a first insulating member, and a second insulating member. The first insulating member is fixedly connected to the cover body, and one end of the first insulating member forms a first connecting end; the second insulating member is fixedly connected to the cover body, and one end of the second insulating member forms a second connecting end; and the first connecting end and the second connecting end are oppositely arranged and fixedly connected. The end cover provided by the present application improves the yield rate and the production efficiency of battery cells.

## Description

### CROSS-REFERENCE TO RELATED APPLICATIONS

The present application claims priority to Chinese Patent Application No. 202323135865.2, filed with the China National Intellectual Property Administration on November 21, 2023 and entitled "END COVER, BATTERY CELL, BATTERY, AND POWER CONSUMING DEVICE", which is incorporated herein by reference in its entirety.

### TECHNICAL FIELD

The present application relates to the technical field of batteries, and in particular, to an electrical end cover, a battery cell, a battery, and a power consuming device.

### BACKGROUND

Energy conservation and emission reduction are key to the sustainable development of the automotive industry, and electric vehicles have become an important part of the sustainable development of the automotive industry due to their advantages in energy conservation and environmental protection. For electric vehicles, the battery technology is also an important factor related to the development thereof.

Batteries are widely applied to fields such as portable electronic devices, electric vehicles, electric tools, unmanned aerial vehicles, and energy storage devices. During manufacturing of batteries, the yield of parts in the batteries is an issue that cannot be ignored. Therefore, how to improve the reliability of the batteries is a technical problem that needs to be urgently resolved in the battery technology.

### SUMMARY

The present application provides an end cover, a battery cell, a battery, and a power consuming device. The end cover may improve the reliability of the battery cell.

The present application is implemented by using the following technical solutions.

According to a first aspect, an embodiment of the present application provides an end cover, which includes a cover body, a first insulating member, and a second insulating member. The first insulating member is fixedly connected to the cover body, and one end of the first insulating member forms a first connecting end. The second insulating member is fixedly connected to the cover body, and one end of the second insulating member forms a second connecting end. The first connecting end and the second connecting end are oppositely disposed and fixedly connected.

According to the end cover in this embodiment of the present application, the first insulating member and the second insulating member are fixed to the cover body. The first connecting end and the second connecting end are fixedly connected, so as to reduce movement amplitudes of the first connecting end and the second connecting end under the action of gravity, thereby reducing a deformation amount of the first insulating member and a deformation amount of the second insulating member. Therefore, after the end cover is mounted on the case of the battery, the first insulating member and the second insulating member are not easily damaged, thereby reducing the mounting difficulty of a battery cell, and improving the yield and the production efficiency of the battery cell.

According to some embodiments of the present application, the first insulating member and the second insulating member are arranged in a first direction. The first insulating member has a first fixing portion fixedly connected with the cover body. A part of the first insulating member located between the first fixing portion and the first connecting end is configured as a first suspended section. In the first direction, a maximum size of the first suspended section is a₁, and a minimum thickness of the first suspended section is t₁, where 40 ≤ a₁/t₁≤ 2100.

The second insulating member has a second fixing portion connected with the cover body. A part of the second insulating member located between the second fixing portion and the second connecting end is configured as a second suspended section. In the first direction, a maximum size of the second suspended section is a₂, and a minimum thickness of the second suspended section is t₂, where 40 ≤ a₂/t₂≤ 2100.

In the foregoing solution, the first insulating member has a large and thin structure, thereby reducing a ratio of a volume of the first insulating member to a space occupied by the battery cell, and improving an energy density of the battery cell. The second insulating member has a large and thin structure, thereby reducing a ratio of a volume of the second insulating member to the space occupied by the battery cell, and improving the energy density of the battery cell.

According to some embodiments of the present application, 60 ≤ a₁/t₁≤ 1500, and/or 60 ≤ a₂/t₂≤ 1500. In the foregoing solution, the first insulating member has a large and thin structure, thereby reducing the ratio of the volume of the first insulating member to the space occupied by the battery cell, and improving the energy density of the battery cell. The second insulating member has a large and thin structure, thereby reducing the ratio of the volume of the second insulating member to the space occupied by the battery cell, and improving the energy density of the battery cell.

According to some embodiments of the present application, the first connecting end and the second connecting end are detachably connected. In the foregoing solution, when service needs to be performed on the battery, the first connecting end and the second connecting end may be detached to separate the first connecting end and the second connecting end, so that parts of the cover body that are covered by the first suspended section and the second suspended section may be exposed, facilitating working personnel to service the end cover.

According to some embodiments of the present application, the first connecting end and the second connecting end are snap-fitted. In the foregoing solution, connection and separation between the first connecting end and the second connecting end are both very convenient, thereby improving the production efficiency and service efficiency of the end cover.

According to some embodiments of the present application, the first connecting end is provided with a first fitting portion, and the second connecting end is provided with a second fitting portion. The first fitting portion is provided with a snap-fit hole. The second fitting portion is configured as an elastic member, and a size of a free end of the second fitting portion is greater than a size of the snap-fit hole, so that the free end of the second fitting portion is snap-fitted with the first fitting portion after passing through the snap-fit hole. In the foregoing solution, connection and separation between the first connecting end and the second connecting end are both very convenient, thereby improving the production efficiency and service efficiency of the end cover.

According to some embodiments of the present application, the first connecting end is provided with a first protruding block. The first protruding block protrudes toward a direction away from the cover body, and the first fitting portion is disposed on the first protruding block. In the foregoing solution, the first fitting portion does not need to extend out of the connection portion exclusively at the first connecting end, and the first fitting portion can fully use a space defined between the first protruding block and the cover body, so that the thickness of the end cover may not be increased due to disposition of the first fitting portion, thereby improving the energy density of the battery cell at least to some extent.

According to some embodiments of the present application, the first insulating member is further provided with a second protruding block, and the second protruding block protrudes toward a direction away from the cover body. The second insulating member is provided with a third protruding block, and the third protruding block protrudes toward a direction away from the cover body. In the foregoing solution, after the end cover is mounted on the battery case, the first protruding block may be pressed against a middle region of an end surface of an electrode assembly facing the end cover, and the second protruding block and the third protruding block may be pressed against an end region of the end surface of the electrode assembly facing the end cover.

According to some embodiments of the present application, the first connecting end and the second connecting end are fixed through bonding. In the foregoing solution, the first connecting end and the second connecting end may be conveniently connected together, thereby improving the connection efficiency between the first connecting end and the second connecting end.

According to some embodiments of the present application, the first connecting end and the second connecting end are fixedly connected through a fastener.

According to some embodiments of the present application, the end cover includes a first electrode terminal and a second electrode terminal, and the first electrode terminal and the second electrode terminal are both mounted at the cover body.

The first insulating member is provided with a first via hole for the first electrode terminal to pass through, and the second insulating member is provided with a second via hole for the second electrode terminal to pass through. A region on an inner side wall of the first via hole that is closest to the first connecting end is configured as the first fixing portion, and a region on an inner side wall of the second via hole that is closest to the second connecting end is configured as the second fixing portion.

According to some embodiments of the present application, the first insulating member is provided with a first receiving area for receiving an acting force. The first insulating member is provided with a first reinforcing member, and the first reinforcing member is at least partially disposed around the first receiving area.

The second insulating member is provided with a second receiving area for receiving an acting force. The second insulating member is provided with a second reinforcing member, and the second reinforcing member is at least partially disposed around the second receiving area. In the foregoing solution, the deformation amounts of the first insulating member and the second insulating member are reduced on the whole, so that it is convenient for the first insulating member and the second insulating member to be successfully demolded by using an ejector pin, and the demolding efficiency of the first insulating member and the second insulating member is improved.

According to some embodiments of the present application, the first insulating member is provided with a first through hole, and the first reinforcing member is located at an outer periphery of the first through hole. The second insulating member is provided with a second through hole, and the second reinforcing member is located at an outer periphery of the second through hole. In the foregoing solution, when the ejector pin pushes against a region around the first through hole on the first insulating member to complete demolding, a deformation amount of the region around the first through hole on the first insulating member can be reduced, so as to facilitate ejecting the first insulating member, thereby improving the demolding efficiency of the first insulating member. The effect that the second reinforcing member is located at the outer periphery of the second through hole is similar to the effect that the first reinforcing member is located at the outer periphery of the first through hole, and details are not repeated herein.

According to some embodiments of the present application, a plurality of first reinforcing members are configured, and the plurality of first reinforcing members are disposed at intervals along a peripheral direction of the first through hole. A plurality of second reinforcing members are configured, and the plurality of second reinforcing members are disposed at intervals along a peripheral direction of the second through hole. In the foregoing solution, not only the structural strength of the region around the first through hole on the first insulating member can be improved, but also the structural strength of the region around the first through hole on the first insulating member can tend to be consistent. The effect of configuring the plurality of second reinforcing members is similar to the foregoing effect, and details are not repeated herein.

According to some embodiments of the present application, the first reinforcing member is arc-shaped and has a first opening, and the first opening faces away from the first through hole. The second reinforcing member is arc-shaped and has a second opening, and the second opening faces away from the second through hole. In the foregoing solution, compared with a straight reinforcing rib, the arc-shaped reinforcing rib can improve the structural strength around the first through hole on the first insulating member better. The effect that the second reinforcing member is arc-shaped is similar to the foregoing effect, and details are not repeated herein.

According to some embodiments of the present application, the first reinforcing member is at least partially located between the first through hole and the first receiving area, and the second reinforcing member is at least partially located between the second through hole and the second receiving area. In the foregoing solution, not only the structural strength of a region around the first receiving area can be increased, but also the structural strength of the region around the first through hole can be increased. The effect that the second reinforcing member is at least partially located between the second through hole and the second receiving area is similar to the foregoing effect, and details are not repeated herein.

According to a second aspect, an embodiment of the present application provides a battery cell, which includes the foregoing end cover.

According to some embodiments of the present application, the battery cell further includes a case and an electrode assembly. The case has an open port. The end cover closes the open port, and the end cover and the case form an accommodating chamber for accommodating the electrode assembly. The battery cell further includes an insulating film. The insulating film wraps the electrode assembly, and one end of the insulating film is connected with the first insulating member and/or the second insulating member. In the foregoing solution, the insulating film, the first insulating member, and the second insulating member together isolate the electrode assembly from a shell and the cover body, thereby improving the safety performance of the battery cell, and reducing the probability of occurrence of a short circuit or electric leakage.

According to a third aspect, an embodiment of the present application provides a battery, which includes the foregoing battery cell.

According to a fourth aspect, an embodiment of the present application provides a power consuming device, which includes the foregoing battery.

Additional aspects and advantages of the present application will be given in the following description, some of which will become apparent from the following description or may be learned from practices of the present application.

### BRIEF DESCRIPTION OF THE DRAWINGS

To describe the technical solutions of embodiments of the present application more clearly, the following briefly describes the accompanying drawings required for describing the embodiments. It should be understood that, the following accompanying drawings show only some embodiments of the present application, which should not be considered as a limitation on the scope. Those of ordinary skill in the art may still derive other related accompanying drawings according to the accompanying drawings without creative efforts.
FIG. 1 is a schematic view of a vehicle according to a first embodiment of the present application;
FIG. 2 is an exploded view of a battery according to the first embodiment of the present application;
FIG. 3 is an exploded view of a battery cell according to the first embodiment of the present application;
FIG. 4 is a schematic view of an end cover in one direction according to the first embodiment of the present application;
FIG. 5 is a schematic view of the end cover in another direction according to the first embodiment of the present application;
FIG. 6 is a schematic view of the end cover in still another direction according to the first embodiment of the present application;
FIG. 7 is a sectional view of FIG. 6 taken along line A-A;
FIG. 8 is a schematic view of a first insulating member and a second insulating member according to the first embodiment of the present application; and
FIG. 9 is a schematic view of a first insulating member and a second insulating member according to a second embodiment of the present application.

Reference numerals: 1000-vehicle, 100-battery, 200-controller, 300-motor, 10-box, 20-battery cell, 11-first sub-box, 12-second sub-box, 21-shell, 22-electrode assembly, 25-electrode terminal, 211-case, 212-end cover, 2121-cover body, 2122-first insulating member, 2122a-first connecting end, 2122b-first fixing portion, 2122c-first reinforcing member, 101-first via hole, 103-first suspended section, 107-first receiving area, 109a-first through hole, 2123-second insulating member, 2123a-second connecting end, 2123b-second fixing portion, 2123c-second reinforcing member, 102-second via hole, 104-second suspended section, 108-second receiving area, 109b-second through hole, 105-first fitting portion, 1051-snap-fit hole, 106-second fitting portion, 1061-connecting rod, 1062-snap-fit protrusion, 2124-first protruding block, 2125-second protruding block, 2126-third protruding block, 2127-first electrode terminal, and 2128-second electrode terminal.

### DETAILED DESCRIPTION

The implementations of the present application are described in further detail below with reference to the accompanying drawings and embodiments. Detailed descriptions of the following embodiments and the accompanying drawings are used for exemplarily illustrating the principle of the present application, rather than used for limiting the protection scope of the present application. In other words, the present application is not limited to the described embodiments.

Unless otherwise defined, meanings of all technical and scientific terms used in the present application are the same as those commonly understood by those skilled in the art to which the present application belongs; and the terms used in the descriptions of the present application are merely for the purpose of describing specific embodiments, but are not intended to limit the present application. The terms "comprise" and "have" and any variations thereof in the specification and the claims of the present application as well as the descriptions of the accompanying drawings are intended to cover non-exclusive inclusion. The terms "first", "second" and the like in the specification and claims of the present application or the drawings are intended to distinguish different objects, and not to describe a specific order or primary-secondary relationship.

Reference to "embodiment" in the present application means that a particular feature, structure or characteristic described in combination with the embodiment may be included in at least one embodiment of the present application. The term appearing at different positions of this description may not refer to the same embodiment or an independent or alternative embodiment that is mutually exclusive with another embodiment. Those skilled in the art explicitly or implicitly understands that the embodiments described in the present application may be combined with other embodiments.

In the descriptions of the present application, it should be noted that, unless otherwise expressly specified and defined, the terms "mount", "connect", "connection" and "attachment" should be understood in a broad sense. For example, the connection may be a fixed connection, a detachable connection, or an integral connection; or the connection may be a direct connection, an indirect connection through an intermediate medium, or internal communication between two elements. Those of ordinary skill in the art may understand the specific meanings of the foregoing terms in the present application according to specific situations.

The term "and/or" in the present application only describes an association relationship for describing associated objects and represents that three relationships may exist. For example, A and/or B may represent the following three cases: only A exists, both A and B exist, and only B exists. In addition, the character "/" in the present application generally indicates an "or" relationship between the associated objects.

In the present application, "a plurality of" means two or more (including two). Similarly, "a plurality of groups" means two or more groups (including two groups), and "a plurality of pieces" means two or more pieces (including two pieces).

In some embodiments, a battery may be a battery module. When a plurality of battery cells are provided, the plurality of battery cells are arranged and fixed to form a battery module.

In some embodiments, the battery may be a battery pack. The battery pack includes a box and a battery cell, and the battery cell or the battery module is accommodated in the box.

In some embodiments, the box may be used as a part of a chassis structure of a vehicle. For example, a part of the box may be at least a part of a floor of the vehicle, or a part of the box may be at least a part of a cross beam and a longitudinal beam of the vehicle.

In some embodiments, the battery may be an energy storage apparatus. The energy storage apparatus includes an energy storage container, an energy storage electric cabinet, and the like.

In the embodiments of the present application, the battery cell may be a secondary battery. The secondary battery refers to a battery cell that can be recharged to activate active materials for continuous use after the battery cell is discharged.

The battery cell may be, but not limited to, a lithium-ion battery, a sodium-ion battery, a sodium-lithium-ion battery, a lithium metal battery, a sodium metal battery, a lithium sulfur battery, a magnesium-ion battery, a nickel-metal hydride battery, a nickel-cadmium battery, a lead storage battery, and the like.

The battery cell generally includes an electrode assembly. The electrode assembly includes a positive electrode, a negative electrode, and a spacer. During charging and discharging of the battery cell, active ions (for example, lithium ions) are intercalated and deintercalated back and forth between the positive electrode and the negative electrode. The spacer is disposed between the positive electrode and the negative electrode, mainly to prevent a short circuit between the positive and negative electrodes and to allow active ions to pass through.

In some embodiments, the positive electrode may be a positive electrode plate. The positive electrode plate may include a positive electrode current collector and a positive electrode active material disposed on at least one surface of the positive electrode current collector.

As an example, the positive electrode current collector has two opposite surfaces in a thickness direction of the positive electrode current collector, and the positive electrode active material is disposed on either or both of the two opposite surfaces of the positive electrode current collector.

As an example, the positive electrode current collector may be a metal foil or a composite current collector. For example, silver-coated aluminum, silver-coated stainless steel, stainless steel, copper, aluminum, nickel, a carbon electrode, carbon, nickel, titanium, or the like may be used as the metal foil. The composite current collector may include a high-polymer material substrate layer and a metal layer. The composite current collector may be formed by forming a metal material (aluminum, an aluminum alloy, nickel, a nickel alloy, titanium, a titanium alloy, silver, a silver alloy, or the like) on the high-polymer material substrate layer (for example, a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials of batteries may also be used.

In some embodiments, the negative electrode may be a negative electrode plate. The negative electrode plate may include a negative electrode current collector.

As an example, the negative electrode current collector may be a metal foil or a composite current collector. For example, silver-coated aluminum, silver-coated stainless steel, stainless steel, copper, aluminum, nickel, a carbon electrode, carbon, nickel, titanium, or the like may be used as the metal foil.

In some embodiments, the negative electrode current collector has two opposite surfaces in a thickness direction of the negative electrode current collector, and a negative electrode active material is disposed on either or both of the two opposite surfaces of the negative electrode current collector.

As an example, the negative electrode active material may be a negative electrode active material used for a battery and well known in the art. As an example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials of batteries may also be used. One type of these negative electrode active materials may be used individually, or two or more types of these negative electrode active materials may be used in combination.

In some implementations, the spacer is a separator. The type of the separator is not particularly limited in the present application, and any well-known separator of a porous structure having good chemical stability and mechanical stability may be used.

As an example, a main material of the separator may be selected from at least one of glass fiber, non-woven fabric, polyethylene, polypropylene, polyvinylidene fluoride, and ceramic. The separator may be a single-layer film or a multi-layer composite film, which is not particularly limited. When the separator is the multi-layer composite film, a material in each layer may be identical or different, which is not particularly limited. The spacer may be an independent component located between the positive and negative electrodes, or may be attached to surfaces of the positive and negative electrodes.

In some implementations, the spacer is a solid-state electrolyte. The solid-state electrolyte is disposed between the positive electrode and the negative electrode, and functions to transfer ions and isolate the positive electrode and the negative electrode.

In some implementations, the battery cell further includes an electrolyte, and the electrolyte functions to conduct ions between the positive electrode and the negative electrode. The electrolyte may be in a liquid state, a gel state, or a solid state. The liquid-state electrolyte includes an electrolyte salt and a solvent.

In some implementations, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluorooxalatoborate, lithium bisoxalatoborate, lithium difluorobisoxalatephosphate, and lithium tetrafluorooxalatephosphate.

In some implementations, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gel-state electrolyte includes a framework network using a polymer as an electrolyte, which is used together with an ionic liquid-lithium salt.

The solid-state electrolyte includes a polymer solid-state electrolyte, an inorganic solid-state electrolyte, or a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, mono-ionic polymer, a polyionic liquid-lithium salt, cellulose, or the like.

As an example, the inorganic solid-state electrolyte may include one or more of an oxide solid electrolyte (crystalline perovskite, Na⁺ superionic conductor, garnet, or an amorphous LiPON film), sulfide solid electrolyte (crystalline Li⁺ superionic conductor (lithium germanium phosphorus sulfur, sulfur silver germanium ore), amorphous sulfide), a halide solid electrolyte, a nitride solid electrolyte and a hydride solid electrolyte.

As an example, the composite solid-state electrolyte is formed by adding an inorganic solid-state electrolyte filler to a polymer solid electrolyte.

In some implementations, the electrode assembly is of a winding structure. The positive electrode plate and the negative electrode plate are wound into the winding structure.

In some implementations, the electrode assembly is a laminating structure.

In some implementations, the battery cell may include a shell. The shell is configured to encapsulate the electrode assembly, the electrolyte, and other components. The shell may be a steel shell, an aluminum shell, a plastic shell (for example, polypropylene), a composite metal shell (for example, a copper-aluminum composite shell), an aluminum-plastic film, or the like.

In some implementations, the shell includes an end cover and a case. The case is provided with an opening, and the end cover closes the opening to form a sealed space for accommodating materials such as the electrode assembly and the electrolyte. The case may be provided with one or more openings. One or more end covers may alternatively be provided.

In some implementations, at least one electrode terminal is disposed on the shell, and the electrode terminal is electrically connected with a tab of the electrode assembly. The electrode terminal may be directly connected with the tab, or may be indirectly connected with the tab by using an adapter. The electrode terminal may be disposed on the end cover, or may be disposed on the case.

In some implementations, an explosion-proof valve is disposed on the shell. The explosion-proof valve is configured to release internal pressure of the battery cell.

As an example, the battery cell may be a cylindrical battery cell, a prismatic battery cell, a soft packet battery cell, or a battery cell in another shape. The prismatic battery cell includes a square-shell battery cell, a blade-shaped battery cell, or a multi-prismatic battery. The multi-prismatic battery is, for example, a hexagonal prismatic battery, which is not specifically limited in the embodiments of the present application.

A battery mentioned in the embodiments of the present application is a single physical module including one or more battery cells to provide a higher voltage and a higher capacity.

In some embodiments, a battery may be a battery module. When a plurality of battery cells are provided, the plurality of battery cells are arranged and fixed to form a battery module.

In some embodiments, the battery may be a battery pack. The battery pack includes a box and a battery cell, and the battery cell or the battery module is accommodated in the box.

In some embodiments, the box may be used as a part of a chassis structure of a vehicle. For example, a part of the box may be at least a part of a floor of the vehicle, or a part of the box may be at least a part of a cross beam and a longitudinal beam of the vehicle.

In some embodiments, the battery may be an energy storage apparatus. The energy storage apparatus includes an energy storage container, an energy storage electric cabinet, and the like.

The battery has outstanding advantages such as high energy density, small environmental pollution, large power density, long service life, wide adaptation range, and small self-discharging coefficient, and is an important component of the development of new energy sources nowadays.

Design factors in many aspects need to be all considered for the development of the battery technology, such as energy density, discharge capacity, charge-discharge rate capability, and other performance parameters. In addition, the assembly efficiency of the battery also needs to be considered.

The battery cell disclosed in the embodiments of the present application may be used in, but not limited to, a power consuming device such as a vehicle, a ship, or an aircraft. The battery cell or the battery disclosed in the present application may be used for forming a power supply system of the power consuming device.

The embodiments of the present application provide a power consuming device using a battery cell as a power supply. The power consuming device may include, but not limited to, a mobile phone, a tablet computer, a notebook computer, an electric toy, an electric tool, an electric bicycle, an electric motorcycle, an electric vehicle, a ship, a spacecraft, or the like. The electric toy may include a fixed or mobile electric toy, for example, a game console, an electric vehicle toy, an electric ship toy, and an electric airplane toy. The spacecraft may include an airplane, a rocket, a spacecraft, a spaceship, and the like.

For ease of description, the power consuming device being a vehicle 1000 in an embodiment of the present application is used as an example to describe the following embodiments.

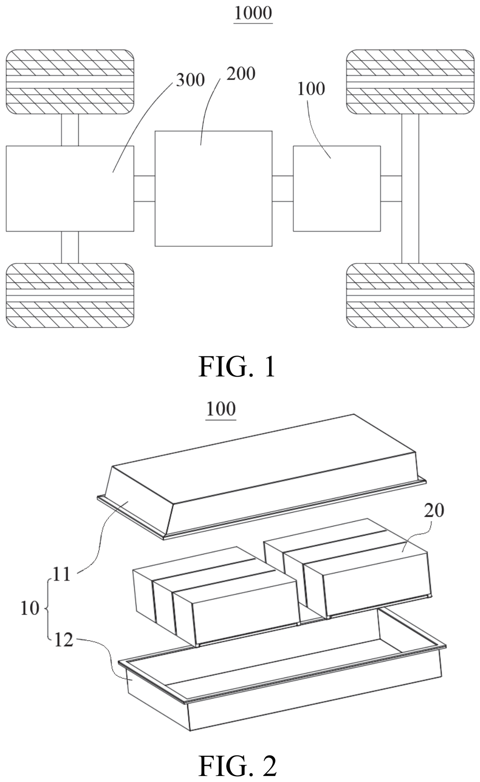

Referring to FIG. 1, FIG. 1 is a schematic view of a vehicle according to a first embodiment of the present application. The vehicle 1000 may be a fuel powered vehicle, a gas powered vehicle, or a new energy vehicle. The new energy vehicle may be a pure electric vehicle, a hybrid electric vehicle, an extended range vehicle, or the like. A battery 100 is disposed inside the vehicle 1000, and the battery 100 may be disposed at a bottom, head, or tail of the vehicle 1000. The battery 100 may be configured to supply power to the vehicle 1000. For example, the battery 100 may serve as an operating power supply of the vehicle 1000, and is used in a circuit system of the vehicle 1000. For example, the battery is configured for operating electricity requirements during starting, navigation, and operation of the vehicle 1000.

The vehicle 1000 may further include a controller 200 and a motor 300. The controller 200 is configured to control the battery 100 to supply power to the motor 300, for example, to meet operating electricity requirements during starting, navigation, and traveling of the vehicle 1000.

In some embodiments of the present application, the battery 100 may serve not only as an operating power supply of the vehicle 1000, but also as a driving power supply of the vehicle 1000, to replace or partially replace fuel or natural gas to provide driving power for the vehicle 1000.

Referring to FIG. 2, FIG. 2 is an exploded view of a battery according to the first embodiment of the present application. A battery 100 includes a box 10 and a battery cell 20, and the battery cell 20 is accommodated in the box 10. The box 10 is configured to provide an accommodating space for the battery cell 20. The box 10 may be of a variety of structures. In some embodiments, the box 10 may include a first sub-box 11 and a second sub-box 12, the first sub-box 11 and the second sub-box 12 cover each other, and the first sub-box 11 and the second sub-box 12 jointly define the accommodating space for accommodating the battery cell 20. The second sub-box 12 may be of a hollow structure being open on one side. The first sub-box 11 may be of a plate-shaped structure. The first sub-box 11 covers an open side of the second sub-box 12, so that the first sub-box 11 and the second sub-box 12 jointly define the accommodating space. Alternatively, each of the first sub-box 11 and the second sub-box 12 may be of a hollow structure being open on one side, and an open side of the first sub-box 11 covers an open side of the second sub-box 12.

In the battery 100, a plurality of battery cells 20 may be provided, and the plurality of battery cells 20 may be connected in series, parallel, or series-parallel. Series-parallel connection means that both series connection and parallel connection exist among the plurality of battery cells 20. The plurality of battery cells 20 may be directly connected in series, parallel, or series-parallel together, and then a whole formed by the plurality of battery cells 20 are accommodated in the box 10. Certainly, the battery 100 may alternatively be in the form that a battery module is formed by a plurality of battery cells 20 that are first connected in series, parallel, or series-parallel, and a plurality of battery modules are then connected in series, parallel, or series-parallel to form a whole and accommodated in the box 10. The battery 100 may also include other structures, for example, the battery 100 may further include a bus component for implementing an electrical connection between the plurality of battery cells 20.

The battery cell 20 may be a secondary battery or a primary battery. The battery cell 20 may alternatively be a lithium-sulfur battery, a sodium-ion battery, or a magnesium-ion battery, but is not limited thereto.

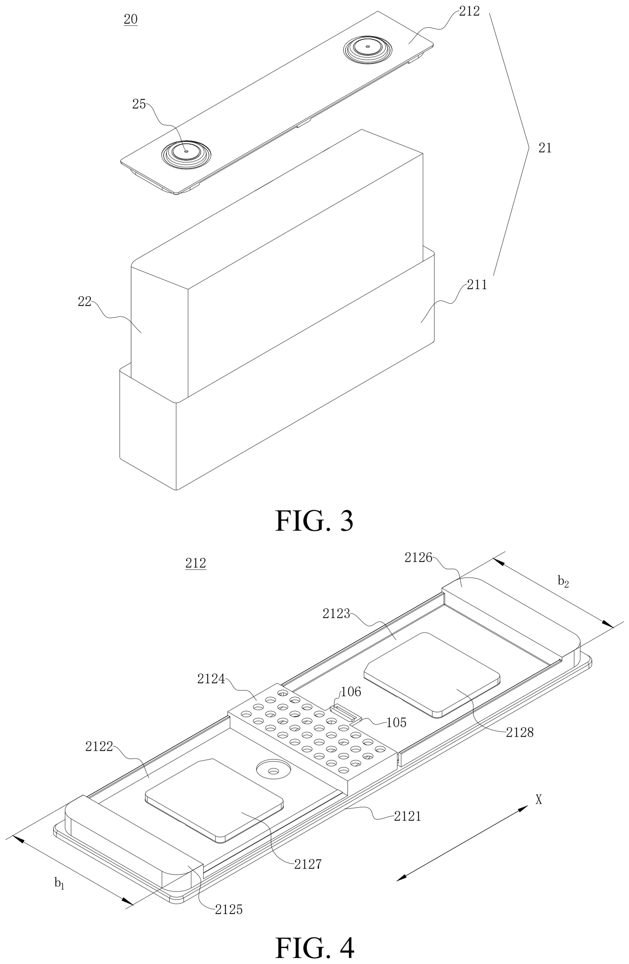

Referring to FIG. 3, FIG. 3 is an exploded view of a battery cell according to some embodiments of the present application. As shown in FIG. 3, the battery cell 20 includes a shell 21, an electrode assembly 22, and electrode terminals 25. The shell 21 includes a case 211 and an end cover 212. The case 211 has an opening, and the end cover 212 closes the opening to isolate an internal environment of the battery cell 20 from an external environment.

The case 211 is an assembly configured to form the internal environment of the battery cell 20 together with the end cover 212, where the formed internal environment may be configured to accommodate the electrode assembly 22, an electrolyte solution, and another component. The case 211 and the end cover 212 may be independent components. The case 211 may have a plurality of shapes and sizes. Specifically, a shape of the case 211 may be determined according to a specific shape and size of the electrode assembly 22. The case 211 may be made of a plurality of materials, such as copper, iron, aluminum, stainless steel, aluminum alloy, or plastic cement.

The end cover 212 refers to a component that covers the opening of the case 211 to isolate the internal environment of the battery cell 20 from the external environment. A shape of the end cover 212 is not limited and may be adapted to the shape of the case 211 to fit the case 211. Optionally, the end cover 212 may be made of a material with specified hardness and strength (for example, aluminum alloy), so that the end cover 212 is less likely to deform under extrusion and collision, enabling the battery cell 20 to have higher structural strength and enhanced reliability. Functional components such as electrode terminals may be arranged on the end cover 212. The electrode terminals may be configured to electrically connect with the electrode assembly 22 to output or input electrical energy of the battery cell 20. The end cover 212 may also be made of a plurality of materials, such as copper, iron, aluminum, stainless steel, aluminum alloy, or plastic cement, which is not particularly limited in the embodiments of the present application. In some embodiments, an insulating structure may be further disposed on an inner side of the end cover 212. The insulating structure may be configured to isolate electrical connection components in the case 211 from the end cover 212, so as to reduce a risk of a short circuit. For example, the insulating structure may be made of plastic, rubber, or the like.

The electrode assembly 22 is a component in the battery cell 20 that undergoes electrochemical reactions. The case 211 may include one or more electrode assemblies 22. The electrode assembly 22 is mainly formed by winding or laminating a positive electrode plate and a negative electrode plate, and a separator is generally arranged between the positive electrode plate and the negative electrode plate, where the separator is configured to separate the positive electrode plate and the negative electrode plate, so as to avoid internal short circuit between the positive electrode plate and the negative electrode plate. Parts of the positive electrode plate and the negative electrode plate with active substances constitute a body portion of the electrode assembly, while parts of the positive electrode plate and the negative electrode plate without active substances separately constitute a tab. A positive electrode tab and a negative electrode tab may be located at one end of the body portion together or at two ends of the body portion respectively. During charging and discharging of the battery, a positive electrode active substance and a negative electrode active substance react with an electrolyte solution, and the tabs are connected to the electrode terminals to form a current loop.

Batteries are widely applied to fields such as portable electronic devices, electric vehicles, electric tools, unmanned aerial vehicles, and energy storage devices. The energy density of a battery directly determines energy storage of the battery. A larger energy density of a battery indicates a larger capacity of the battery having a same volume, and more electric energy can be stored, so that after the battery is mounted on a power consuming device, the use time of the power consuming device can be prolonged.

The thickness of the end cover and the thickness of the case may affect the energy density of the battery. Therefore, as requirements on the energy density of the battery become higher, the thickness of the end cover and the thickness of the case become lower. However, as a part of the end cover, an insulating member (that is, the plastic cement under the battery) disposed at the inner side of the end cover has an increasingly low thickness.

An existing insulating member may include a first insulating member and a second insulating member that are separately disposed. To improve the energy density of a battery, a thickness of the first insulating member and a thickness of the second insulating member are increasingly lower. The first insulating member may be mounted between the cover body of the end cover and a terminal post by injection molding. Because of a relatively low thickness of the first insulating member, a suspended section is formed between a region in which the first insulating member and the cover body are fixed and an end of the first insulating member close to the second insulating member. Similarly, because of a relatively low thickness of the second insulating member, a suspended section is formed between a region in which the second insulating member and the cover body are fixed and an end of the second insulating member close to the first insulating member. A free end of the suspended section of the first insulating member and a free end of the suspended section of the second insulating member may move downward under the action of gravity, causing deformation of the first insulating member and the second insulating member. Consequently, when the end cover is mounted on the battery case, inaccurate positioning of the first insulating member and the second insulating member is easily caused, and damage of the first insulating member and the second insulating member is easily caused, thereby reducing the yield of the battery and increasing the production difficulty of the battery.

Therefore, the present application provides an end cover. The end cover can effectively reduce a deformation amount of the suspended section of the first insulating member and a deformation amount of the suspended section of the second insulating member, thereby improving the yield of the battery, reducing the production difficulty of the battery, and improving the production efficiency of the battery.

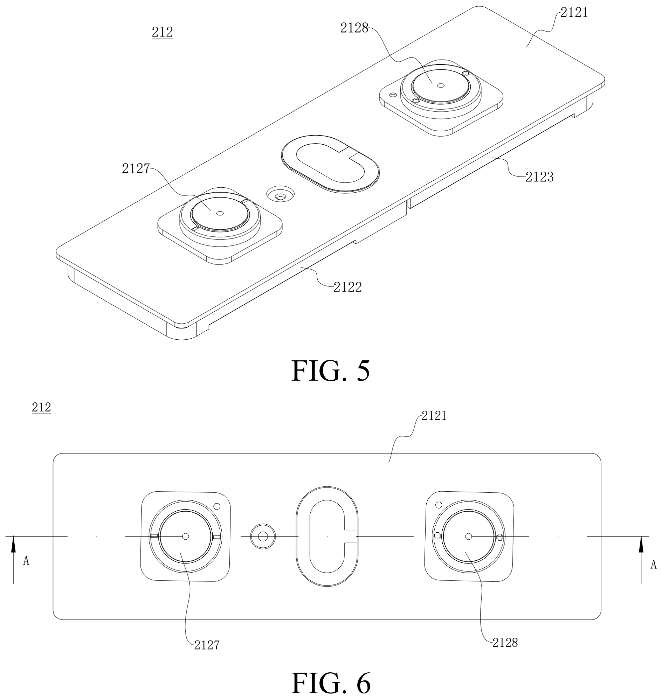

As shown in FIG. 4 to FIG. 7, the end cover 212 according to this embodiment of the present application may include a cover body 2121, a first insulating member 2122, and a second insulating member 2123. The cover body 2121 and the case of the battery define an accommodating chamber for accommodating the electrode assembly. The cover body 2121 may be a metal member or an insulating member, and a material of the cover body 2121 is not limited in the present application.

The first insulating member 2122 is fixedly connected to the cover body 2121, and a middle region of the first insulating member 2122 may be fixedly connected with the cover body 2121. Of course, an edge region of the first insulating member 2122 may also be fixedly connected with the cover body 2121.

One end of the first insulating member 2122 forms a first connecting end 2122a, and one end of the first insulating member 2122 may be spaced apart certain distance from a region of the first insulating member 2122 that is fixed with the cover body 2121, so that the suspended section is formed between the first connecting end 2122a and a part of the first insulating member 2122 that is fixed with the cover body 2121, and the first connecting end 2122a is the free end of the suspended section.

In an embodiment of the present application, a middle region of the first insulating member 2122 in a length direction may be fixedly connected with the cover body 2121, and one end of the first insulating member 2122 in the length direction may form the first connecting end 2122a.

The first insulating member 2122 may be made of an insulating material. For example, the first insulating member 2122 may be configured as a rubber member, a plastic member, or the like. The specific material of the first insulating member 2122 is not limited in the present application.

The second insulating member 2123 is fixedly connected to the cover body 2121, and a middle region of the second insulating member 2123 may be fixedly connected with the cover body 2121. Of course, an edge region of the second insulating member 2123 may also be fixedly connected with the cover body 2121.

One end of the second insulating member 2123 forms a second connecting end 2123a, and one end of the second insulating member 2123 may be spaced apart certain distance from a region of the second insulating member 2123 that is fixed with the cover body 2121, so that the suspended section is formed between the second connecting end 2123a and a part of the second insulating member 2123 that is fixed with the cover body 2121, and the second connecting end 2123a is the free end of the suspended section.

In an embodiment of the present application, a middle region of the second insulating member 2123 in a length direction may be fixedly connected with the cover body 2121, and one end of the second insulating member 2123 in the length direction may form the second connecting end 2123a.

The second insulating member 2123 may be made of an insulating material. For example, the second insulating member 2123 may be configured as a rubber member, a plastic member, or the like. The specific material of the second insulating member 2123 is not limited in the present application.

In some embodiments of the present application, the first connecting end 2122a and the second connecting end 2123a are oppositely disposed and fixedly connected. Since the first connecting end 2122a and the second connecting end 2123a are fixedly connected with each other, the second connecting end 2123a may limit the movement amplitude of the first connecting end 2122a under the action of gravity, and the first connecting end 2122a may limit the movement amplitude of the second connecting end 2123a under the action of gravity.

Apparently, although the thickness of the first insulating member 2122 and the thickness of the second insulating member 2123 are relatively small, because the first connecting end 2122a limits a descending amplitude of the second connecting end 2123a, a deformation amount of the second insulating member 2123 is reduced. Because the second connecting end 2123a limits a descending amplitude of the first connecting end 2122a, a deformation amount of the first connecting end 2122a is reduced.

Because the free end of the suspended section of the first insulating member 2122 is fixed to the second connecting end 2123a, the free end of the suspended section of the first insulating member 2122 is no longer free, and the suspended section of the first insulating member 2122 is no longer suspended. In this case, the free end of the suspended section of the first insulating member 2122 is the first connecting end 2122a. Because the free end of the suspended section of the second insulating member 2123 is fixed to the first connecting end 2122a, the free end of the suspended section of the second insulating member 2123 is no longer free, and the suspended section of the second insulating member 2123 is no longer suspended. In this case, the free end of the suspended section of the second insulating member 2123 is the second connecting end 2123a.

The first connecting end 2122a and the second connecting end 2123a may be fixed through snap fitting, bonding, or a fastener. The manner in which the first connecting end 2122a and the second connecting end 2123a are fixed is not limited in the present application, as long as it is ensured that the first connecting end 2122a and the second connecting end 2123a are fixed to each other to restrict movement of each other, thereby reducing a deformation amount of the first insulating member 2122 and the deformation amount of the second insulating member 2123.

According to the end cover 212 in this embodiment of the present application, the first insulating member 2122 and the second insulating member 2123 are fixed to the cover body 2121. The first connecting end 2122a and the second connecting end 2123a are fixedly connected, thereby reducing the movement amplitudes of the first connecting end 2122a and the second connecting end 2123a under the action of gravity, and reducing the deformation amount of the first insulating member 2122 and the deformation amount of the second insulating member 2123, so that after the end cover 212 is mounted on the case of the battery, the first insulating member 2122 and the second insulating member 2123 are not easily damaged, thereby reducing the mounting difficulty of the battery cell, and improving the yield and the production efficiency of the battery cell.

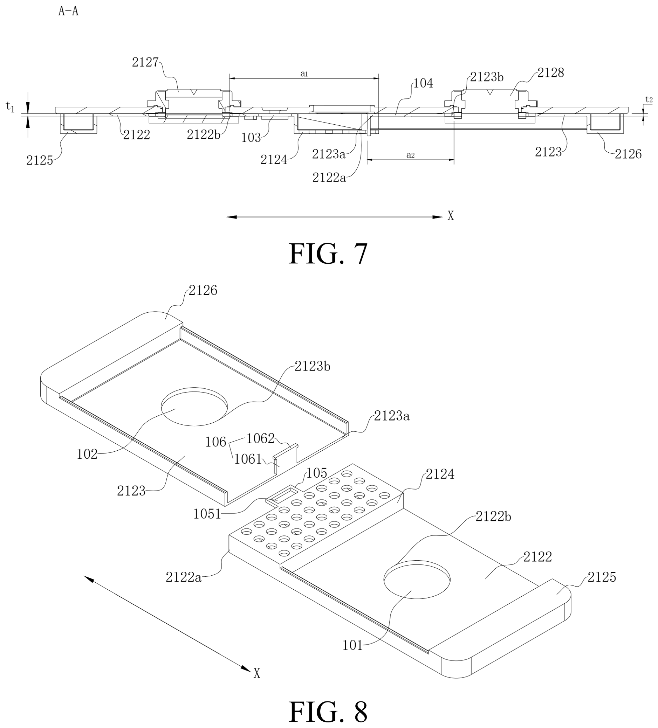

As shown in FIG. 7, in some embodiments of the present application, the first insulating member 2122 and the second insulating member 2123 are arranged in a first direction X. The first direction X may be the length direction of the first insulating member 2122 or the second insulating member 2123, so that the first connecting end 2122a may be one end of the first insulating member 2122 in the length direction, and the second connecting end 2123a may be one end of the second insulating member 2123 in the length direction. Certainly, the first direction X may alternatively be a length direction of the first insulating member 2122 and the second insulating member 2123 as a whole. For example, the first insulating member 2122 and the second insulating member 2123 are both squares, and after they are arranged, a whole structure of the first insulating member 2122 and the second insulating member 2123 is rectangular. Therefore, the first direction X is a length direction of the whole structure.

The first insulating member 2122 has a first fixing portion 2122b fixedly connected with the cover body 2121. For example, the first insulating member 2122 is provided with a first via hole 101 for the terminal post to pass through, and an inner periphery of the first via hole 101 is fixedly connected with the cover body 2121, so that the inner periphery of the first via hole 101 is the first fixing portion 2122b.

A part of the first insulating member 2122 located between the first fixing portion 2122b and the first connecting end 2122a is configured as a first suspended section 103. It should be noted that, the first fixing portion 2122b is one of two ends forming the first suspended section 103. That is, not all the part of the first insulating member 2122 that is fixed with the cover body 2121 is the first fixing portion 2122b in the present application, but only the part that defines the first suspended section 103 with the first connecting end 2122a is the first fixing portion 2122b in the present application. For example, the first insulating member 2122 is provided with the first via hole 101 for the terminal post to pass through, and the inner periphery of the first via hole 101 is fixedly connected with the cover body 2121. However, not all the inner periphery of the first via hole 101 is the first fixing portion 2122b, but the part that defines the first suspended section 103 with the first connecting end 2122a is the first fixing portion 2122b in the present application.

In the first direction X, a size of the first suspended section 103 is a₁, and a minimum thickness of the first suspended section 103 is t₁, where 40 ≤ a₁/t₁≤ 2100. A ratio of the size of the first suspended section 103 in the first direction X to the minimum thickness of the first suspended section 103 represents a bending difficulty. A smaller ratio of the size of the first suspended section 103 in the first direction X to the minimum thickness of the first suspended section 103 indicates that the size of the first suspended section 103 in the first direction X is relatively small, and the thickness of the first suspended section 103 is relatively large. In this case, it is relatively difficult to bend the first suspended section 103. A larger ratio of the size of the first suspended section 103 in the first direction X to the minimum thickness of the first suspended section 103 indicates that the size of the first suspended section 103 in the first direction X is relatively large, and the thickness of the first suspended section 103 is relatively large. In this case, it is relatively easy to bend the first suspended section 103.

For example, the ratio a₁/t₁ of the size a₁ of the first suspended section 103 to the minimum thickness t₁ of the first suspended section 103 may be 40, 100, 200, 300, 400, 500, 600, 700, 800, 900, 1000, 1100, 1200, 1300, 1400, 1500, 1600, 1700, 1800, 1900, 2000, or 2100. In the embodiments of the present application, a specific range of a₁/t₁ is not limited, provided that the above range is met.

In the present application, the ratio of the size of the first suspended section 103 in the first direction X to the minimum thickness of the first suspended section 103 meets the foregoing condition, so that the first suspended section 103 needs to be fixedly connected to the first connecting end 2122a and the second connecting end 2123a to limit a deformation amount of the first suspended section 103. In addition, after the first connecting end 2122a and the second connecting end 2123a are fixedly connected, the deformation amount of the first suspended section 103 may also be significantly restricted, thereby effectively reducing the probability that the first insulating member 2122 is damaged in a process in which the cover plate is mounted in the battery case. Certainly, a technical problem that the length is excessively large or the thickness is excessively small, resulting in a relatively large deformation amount of the first suspended section 103 even after the first suspended section 103 is fixedly connected by the first connecting end 2122a and the second connecting end 2123a does not occur either.

The second insulating member 2123 has a second fixing portion 2123b fixedly connected with the cover body 2121. For example, the second insulating member 2123 is provided with a second via hole 102 for the terminal post to pass through, and an inner periphery of the second via hole 102 is fixedly connected with the cover body 2121, so that the inner periphery of the second via hole 102 is the second fixing portion 2123b.

A part of the second insulating member 2123 located between the second fixing portion 2123b and the second connecting end 2123a is configured as the second suspended section 104. It should be noted that the second fixing portion 2123b is one of two ends forming the second suspended section 104. That is, not all the part of the second insulating member 2123 that is fixed with the cover body 2121 is the second fixing portion 2123b in the present application, but only the part that defines the second suspended section 104 with the second connecting end 2123a is the second fixing portion 2123b in the present application. For example, the second insulating member 2123 is provided with the second via hole 102 for the terminal post to pass through, and the inner periphery of the second via hole 102 is fixedly connected with the cover body 2121. However, not all the inner periphery of the second via hole 102 is the second fixing portion 2123b, but the part that defines the second suspended section 104 with the second connecting end 2123a is the second fixing portion 2123b in the present application.

In the first direction X, a size of the second suspended section 104 is a₂, and a minimum thickness of the second suspended section 104 is t₂, where 40 ≤ a₂/t₂≤ 2100. A ratio of the size of the second suspended section 104 in the first direction X to the minimum thickness of the second suspended section 104 represents a bending difficulty. A smaller ratio of the size of the second suspended section 104 in the first direction X to the minimum thickness of the second suspended section 104 indicates that the size of the second suspended section 104 in the first direction X is relatively small, and the thickness of the second suspended section 104 is relatively large. In this case, it is relatively difficult to bend the second suspended section 104. A larger ratio of the size of the second suspended section 104 in the first direction X to the minimum thickness of the second suspended section 104 indicates that the size of the second suspended section 104 in the first direction X is relatively large, and the thickness of the second suspended section 104 is relatively large. In this case, it is relatively easy to bend the second suspended section 104.

For example, the ratio a₂/t₂ of the size a₂ of the second suspended section 104 to the minimum thickness t₂ of the second suspended section 104 may be 40, 100, 200, 300, 400, 500, 600, 700, 800, 900, 1000, 1100, 1200, 1300, 1400, 1500, 1600, 1700, 1800, 1900, 2000, or 2100. In the embodiments of the present application, a specific range of a₂/t₂ is not limited, provided that the above range is met.

In the present application, the ratio of the size of the second suspended section 104 in the first direction X to the minimum thickness of the second suspended section 104 meets the foregoing condition, so that the second suspended section 104 needs to be fixedly connected to the first connecting end 2122a and the second connecting end 2123a to limit a deformation amount of the second suspended section 104. In addition, after the first connecting end 2122a and the second connecting end 2123a are fixedly connected, the deformation amount of the second suspended section 104 can be significantly restricted, thereby effectively reducing the probability that the second insulating member 2123 is damaged in a process in which the cover plate is mounted in the battery case. Certainly, a technical problem that the length is excessively large or the thickness is excessively small, resulting in a relatively large deformation amount of the second suspended section 104 even after the second suspended section 104 is fixedly connected by the first connecting end 2122a and the second connecting end 2123a does not occur either.

In some embodiments of the present application, in the first direction X, the size of the first suspended section 103 is a₁, and the minimum thickness of the first suspended section 103 is t₁, where 60 ≤ a₁/t₁≤ 1500. For example, the ratio a₁/t₁ of the size a₁ of the first suspended section 103 to the minimum thickness t₁ of the first suspended section 103 may be 60, 100, 200, 300, 400, 500, 600, 700, 800, 900, 1000, 1100, 1200, 1300, 1400, or 1500. In the embodiments of the present application, a specific range of a₁/t₁ is not limited, provided that the above range is met. The ratio of the size of the first suspended section 103 in the first direction X to the minimum thickness of the first suspended section 103 represents a bending difficulty. A smaller ratio of the size of the first suspended section 103 in the first direction X to the minimum thickness of the first suspended section 103 indicates that the size of the first suspended section 103 in the first direction X is relatively small, and the thickness of the first suspended section 103 is relatively large. In this case, it is relatively difficult to bend the first suspended section 103. A larger ratio of the size of the first suspended section 103 in the first direction X to the minimum thickness of the first suspended section 103 indicates that the size of the first suspended section 103 in the first direction X is relatively large, and the thickness of the first suspended section 103 is relatively large. In this case, it is relatively easy to bend the first suspended section 103.

In the first direction X, the size of the second suspended section 104 is a₂, and the minimum thickness of the second suspended section 104 is t₂, where 60 ≤ a₂/t₂≤ 1500. For example, the ratio a₂/t₂ of the size a₂ of the second suspended section 104 to the minimum thickness t₂ of the second suspended section 104 may be 60, 100, 200, 300, 400, 500, 600, 700, 800, 900, 1000, 1100, 1200, 1300, 1400, or 1500. In the embodiments of the present application, a specific range of a₂/t₂ is not limited, provided that the above range is met. The ratio of the size of the second suspended section 104 in the first direction X to the minimum thickness of the second suspended section 104 represents a bending difficulty. A smaller ratio of the size of the second suspended section 104 in the first direction X to the minimum thickness of the second suspended section 104 indicates that the size of the second suspended section 104 in the first direction X is relatively small, and the thickness of the second suspended section 104 is relatively large. In this case, it is relatively difficult to bend the second suspended section 104. A larger ratio of the size of the second suspended section 104 in the first direction X to the minimum thickness of the second suspended section 104 indicates that the size of the second suspended section 104 in the first direction X is relatively large, and the thickness of the second suspended section 104 is relatively large. In this case, it is relatively easy to bend the second suspended section 104.

In some embodiments of the present application, as shown in FIG. 7, a minimum thickness t₁ of the first insulating member 2122 meets: 0.1 mm ≤ t₁≤ 1.0 mm, and/or a minimum thickness t₂ of the second insulating member 2123 meets 0.1 mm ≤ t₂≤ 1.0 mm.

For example, the minimum thickness t₁ of the first insulating member 2122 may be 0.1 mm, 0.2 mm, 0.3 mm, 0.4 mm, 0.5 mm, 0.6 mm, 0.7 mm, 0.8 mm, 0.9 mm, or 1.0 mm. If the minimum thickness of the first insulating member 2122 meets the foregoing range, a ratio of a volume of the first insulating member 2122 to a space occupied by the battery cell 20 may be reduced based on the overall thickness of the first insulating member 2122, thereby improving the energy density of the battery cell 20. The value of the minimum thickness of the first insulating member 2122 is merely a common embodiment of the minimum thickness of the first insulating member 2122, and all fall within the protection scope of the present application provided that the minimum thickness of the first insulating member 2122 falls within the foregoing range.

The minimum thickness t₂ of the second insulating member 2123 may be 0.1 mm, 0.2 mm, 0.3 mm, 0.4 mm, 0.5 mm, 0.6 mm, 0.7 mm, 0.8 mm, 0.9 mm, or 1.0 mm. If the minimum thickness of the second insulating member 2123 meets the foregoing range, a ratio of a volume of the second insulating member 2123 to the space occupied by the battery cell 20 may be reduced based on the overall thickness of the second insulating member 2123, thereby improving the energy density of the battery cell 20. The value of the minimum thickness of the second insulating member 2123 is merely a common embodiment of the minimum thickness of the second insulating member 2123, and all fall within the protection scope of the present application provided that the minimum thickness of the second insulating member 2123 falls within the foregoing range.

According to some embodiments of the present application, the minimum thickness t₁ of the first insulating member 2122 meets 0.1 mm≤t₁≤0.6 mm. For example, the minimum thickness t₁ of the first insulating member 2122 may be 0.1 mm, 0.2 mm, 0.3 mm, 0.4 mm, 0.5 mm, or 0.6 mm. That is, the minimum thickness of the first insulating member 2122 may be further reduced, so as to further reduce the overall thickness of the first insulating member 2122, and reduce the ratio of the volume of the first insulating member 2122 to the space occupied by the battery cell 20, thereby improving the energy density of the battery cell 20. The value of the minimum thickness of the first insulating member 2122 is merely a common embodiment of the minimum thickness of the first insulating member 2122, and all fall within the protection scope of the present application provided that the minimum thickness of the first insulating member 2122 falls within the foregoing range.

According to some embodiments of the present application, the minimum thickness t₂ of the second insulating member 2123 meets 0.1 mm ≤ t₂≤ 0.6 mm. For example, the minimum thickness t₂ of the second insulating member 2123 may be 0.1 mm, 0.2 mm, 0.3 mm, 0.4 mm, 0.5 mm, or 0.6 mm. That is, the minimum thickness of the second insulating member 2123 may be further reduced, so as to further reduce the overall thickness of the second insulating member 2123, and reduce the ratio of the volume of the second insulating member 2123 to the space occupied by the battery cell 20, thereby improving the energy density of the battery cell 20. The value of the minimum thickness of the second insulating member 2123 is merely a common embodiment of the minimum thickness of the second insulating member 2123, and all fall within the protection scope of the present application provided that the minimum thickness of the second insulating member 2123 falls within the foregoing range.

In some embodiments of the present application, as shown in FIG. 7 to FIG. 9, the first connecting end 2122a and the second connecting end 2123a are detachably connected. Therefore, after the first connecting end 2122a and the second connecting end 2123a are connected together, the deformation amount of the first suspended section 103 under the action of the gravity and the deformation amount of the second suspended section 104 under the action of the gravity can be lowered. Meanwhile, when service needs to be performed on the battery, the first connecting end 2122a and the second connecting end 2123a may be detached to separate the first connecting end 2122a and the second connecting end 2123a, so that parts of the cover body 2121 that are covered by the first suspended section 103 and the second suspended section 104 may be exposed, facilitating working personnel to service the end cover 212.

According to some embodiments of the present application, the first connecting end 2122a and the second connecting end 2123a may be detachably connected in a plurality of manners. For example, the first connecting end 2122a and the second connecting end 2123a may be detachably connected through snap fitting, or may be detachably connected through bonding, or certainly may be detachably connected through a fastener. The manner in which the first connecting end 2122a and the second connecting end 2123a are detachably connected is not limited in the present application, provided that the first connecting end 2122a and the second connecting end 2123a are connected when the first suspended section 103 and the second suspended section 104 need to be connected, and can be separated when the first suspended section 103 and the second suspended section 104 do not need to be connected.

According to some embodiments of the present application, the first connecting end 2122a and the second connecting end 2123a are snap-fitted. Therefore, connection and separation between the first connecting end 2122a and the second connecting end 2123a are both very convenient, thereby improving the production efficiency and service efficiency of the end cover 212.

In some embodiments of the present application, as shown in FIG. 4, FIG. 7, and FIG. 8, the first connecting end 2122a is provided with a first fitting portion 105, and the second connecting end 2123a is provided with a second fitting portion 106. The first fitting portion 105 is provided with a snap-fit hole 1051, the second fitting portion 106 is configured as an elastic member, and a size of a free end of the second fitting portion 106 is greater than a size of the snap-fit hole 1051, so that the free end of the second fitting portion 106 is snap-fitted with the first fitting portion 105 after passing through the snap-fit hole 1051.

The second fitting portion 106 may include a connecting rod 1061 and a snap-fit protrusion 1062. The snap-fit protrusion 1062 is disposed at a free end of the connecting rod 1061, that is, the snap-fit protrusion 1062 is disposed at an end of the connecting rod 1061 far away from the second connecting end 2123a. The connecting rod 1061 may pass through the snap-fit hole 1051, and a size of the snap-fit protrusion 1062 is greater than the size of the snap-fit hole 1051. If the snap-fit protrusion 1062 is a component that is relatively difficult to be deformed, it is relatively difficult for the snap-fit protrusion 1062 to pass through the snap-fit hole 1051. In the present application, the snap-fit protrusion 1062 is an elastic member. Therefore, the snap-fit protrusion 1062 may reduce a size itself by deformation, so as to pass through the snap-fit hole 1051. After passing through the snap-fit hole 1051, the snap-fit protrusion 1062 may restore an original form after being no longer subjected to an external force. At this time, the size of the snap-fit protrusion 1062 is greater than the snap-fit hole 1051 again. In this case, the connecting rod 1061 passes through the snap-fit hole 1051 and is fitted with the snap-fit hole 1051. The snap-fit protrusion 1062 is snap-fitted to a surface of the first fitting portion 105.

In some embodiments of the present application, when no external force is applied, a cross-sectional area of the snap-fit protrusion 1062 is greater than a cross-sectional area of the connecting rod 1061, so that after the snap-fit protrusion 1062 passes through the snap-fit hole 1051, the connecting rod 1061 can be fitted with the snap-fit hole 1051 and the snap-fit protrusion 1062 is snap-fitted to the surface of the first fitting portion 105.

In some embodiments of the present application, as shown in FIG. 4, FIG. 7, and FIG. 8, the first connecting end 2122a is provided with a first protruding block 2124, and the first protruding block 2124 protrudes toward a direction away from the cover body 2121. It should be noted that, the first protruding block 2124 may be pressed against the electrode assembly when the end cover 212 is mounted on the case of the battery cell. Because the first fitting portion 105 is disposed on the first protruding block 2124, the first fitting portion 105 does not need to extend out of the connection portion exclusively at the first connecting end 2122a. The first fitting portion 105 can fully use a space defined between the first protruding block 2124 and the cover body 2121, so that the thickness of the end cover 212 may not be increased due to disposition of the first fitting portion 105, thereby improving the energy density of the battery cell 20 at least to some extent.

In some embodiments of the present application, as shown in FIG. 4, FIG. 7, and FIG. 8, the first insulating member 2122 is further provided with a second protruding block 2125, and the second protruding block 2125 protrudes toward a direction away from the cover body 2121. The second insulating member 2123 is provided with a third protruding block 2126, and the third protruding block 2126 protrudes toward a direction away from the cover body 2121. For example, the first insulating member 2122 has two ends in the length direction. One end is close to the second insulating member 2123, and the other end is away from the second insulating member 2123. The second protruding block 2125 may be disposed on a side at the other end of the first insulating member 2122 that faces away from the cover body 2121. The second insulating member 2123 has two ends in the length direction. One end is close to the first insulating member 2122, and the other end is away from the first insulating member 2122. The third protruding block 2126 may be disposed on a side at the other end of the second insulating member 2123 that faces away from the cover body 2121.

After the end cover 212 is mounted on the battery case, the second protruding block 2125 and the third protruding block 2126 are pressed against the electrode assembly. It can be understood that, after the end cover 212 is mounted on the battery case, the first protruding block 2124 may be pressed against a middle region of an end surface of the electrode assembly facing the end cover 212, and the second protruding block 2125 and the third protruding block 2126 may be pressed against an end region of the end surface of the electrode assembly facing the end cover 212.

In some embodiments of the present application, the first connecting end 2122a and the second connecting end 2123a are fixed through bonding. Therefore, the first connecting end 2122a and the second connecting end 2123a may be conveniently connected together, thereby improving the connection efficiency between the first connecting end 2122a and the second connecting end 2123a.

According to some embodiments of the present application, the first connecting end 2122a and the second connecting end 2123a are fixedly connected through a fastener. For example, the first connecting end 2122a and the second connecting end 2123a may be fixedly connected through a bolt. When the first insulating member 2122 and the second insulating member 2123 need to be separated, the bolt may be unscrewed from the first connecting end 2122a and the second connecting end 2123a, thereby improving the service efficiency of the battery cell. Certainly, the first connecting end 2122a and the second connecting end 2123a may alternatively be fixedly connected through riveting. Types of the fastener are not specifically limited in the present application, and all fall within the protection scope of the present application provided that the first connecting end 2122a and the second connecting end 2123a are connected through the fastener.

According to some embodiments of the present application, as shown in FIG. 4 to FIG. 7, the end cover 212 includes a first electrode terminal 2127 and a second electrode terminal 2128, and the first electrode terminal 2127 and the second electrode terminal 2128 are both mounted at the cover body 2121. The first insulating member 2122 is provided with a first via hole 101 for the first electrode terminal 2127 to pass through and the second insulating member 2123 is provided with a second via hole 102 for the second electrode terminal 2128 to pass through. A region on an inner side wall of the first via hole 101 close to the first connecting end 2122a is configured as the first fixing portion 2122b, and a region on an inner side wall of the second via hole 102 that is closest to the second connecting end 2123a is configured as the second fixing portion 2123b.

It can be understood that, the inner side wall of the first via hole 101 may be fixedly connected with the first electrode terminal 2127 or does not move relative to the first electrode terminal 2127. Therefore, a cantilever portion can be formed between the region on the inner side wall of the first via hole 101 that is closest to the first connecting end 2122a and the first connecting end 2122a. Similarly, the inner side wall of the second via hole 102 may be fixedly connected with the second electrode terminal 2128 or does not move relative to the second electrode terminal 2128. Therefore, a cantilever portion can be formed between the region on the inner side wall of the second via hole 102 that is closest to the second connecting end 2123a and the second connecting end 2123a.

After the first insulating member 2122, the cover body 2121 and the first electrode terminal 2127 are fixed together, and the second insulating member 2123, the cover body 2121 and the second electrode terminal 2128 are fixed together, because the first connecting end 2122a and the second connecting end 2123a are connected with each other, the probability that the deformation amounts of the first insulating member 2122 and the second insulating member 2123 become excessively large due to gravity is reduced. In addition, the impact of gravity on the region at the first via hole 101 and the region at the second via hole 102 is reduced.

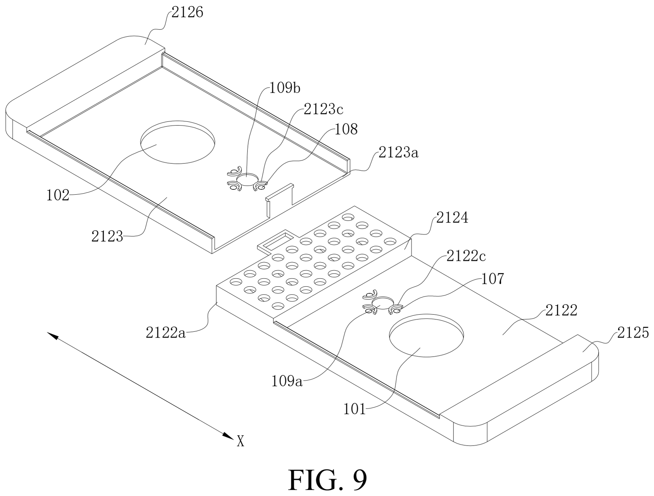

In some embodiments of the present application, as shown in FIG. 9, the first insulating member 2122 is provided with a first receiving area 107 for receiving a force. The first insulating member 2122 is provided with a first reinforcing member 2122c, and the first reinforcing member 2122c is at least partially disposed around the first receiving area 107.

The first receiving area 107 may receive an acting force. For example, during a process of demolding, an ejector pin may abut against the first receiving area 107, and the ejector pin may apply the acting force to the first receiving area 107, so as to release the first insulating member 2122 from a mold.

The first receiving area 107 may have a mark. For example, the mark may be etched on the first receiving area 107, or the mark may be coated on the first receiving area 107, as long as the ejector pin can conveniently contact the first receiving area 107 after the first receiving area 107 has the mark. The first receiving area 107 may alternatively be a groove having certain depth, so that the ejector pin can be conveniently fitted with the groove, thereby not only implementing the contact between the ejector pin and the first receiving area 107, but also implementing a locating function.

The first reinforcing member 2122c is at least partially disposed around the first receiving area 107, so that the first reinforcing member 2122c may improve the structural strength of the first receiving area 107. The first reinforcing member 2122c may be close to the first receiving area 107, or the first reinforcing member 2122c may extend to the first receiving area 107, provided that the acting force can be applied to the first receiving area 107.

Therefore, after the acting force is applied to the first receiving area 107, for example, in a process in which the ejector pin abuts against the first receiving area 107 to implement demolding, a deformation amount of a region around the first receiving area 107 is reduced, and even a deformation amount of the whole first insulating member 2122 is reduced, so as to facilitate successful demolding of the first insulating member 2122 by the ejector pin, thereby improving the demolding efficiency of the first insulating member 2122.

In some embodiments of the present application, the second insulating member 2123 is provided with a second receiving area 108 for receiving a force. The second insulating member 2123 is provided with a second reinforcing member 2123c, and the second reinforcing member 2123c is at least partially disposed around the second receiving area 108.

The second receiving area 108 may receive an acting force. For example, during a process of demolding, the ejector pin may abut against the second receiving area 108, and the ejector pin may apply the acting force to the second receiving area 108, so as to release the second insulating member 2123 from a mold.

The second receiving area 108 may have a mark. For example, the mark may be etched on the second receiving area 108, or the mark may be coated on the second receiving area 108, as long as the ejector pin can conveniently contact the second receiving area 108 after the second receiving area 108 has the mark. The second receiving area 108 may alternatively be a groove having certain depth, so that the ejector pin can be conveniently fitted with the groove, thereby not only implementing the contact between the ejector pin and the second receiving area 108, but also implementing a locating function.

The second reinforcing member 2123c is at least partially disposed around the second receiving area 108, so that the second reinforcing member 2123c may improve the structural strength of the second receiving area 108. The second reinforcing member 2123c may be close to the second receiving area 108, or the second reinforcing member 2123c may extend to the second receiving area 108, provided that the acting force can be applied to the second receiving area 108.

Therefore, after the acting force is applied to the second receiving area 108, for example, in a process in which the ejector pin abuts against the second receiving area 108 to implement demolding, a deformation amount of a region around the second receiving area 108 is reduced, and even a deformation amount of the whole second insulating member 2123 is reduced, so as to facilitate successful demolding of the second insulating member 2123 by the ejector pin, thereby improving the demolding efficiency of the second insulating member 2123.

The first insulating member may be provided with a first through hole 109a. The first through hole 109a may be a through hole right opposite to a liquid injection hole. The first through hole 109a may run through the first insulating member 2122 in a thickness direction of the first insulating member 2122. The first reinforcing member 2122c is disposed on the first insulating member 2122. The first reinforcing member 2122c may be disposed on at least one of two sides of the first insulating member 2122 in the thickness direction. The first reinforcing member 2122c may alternatively protrude from a surface of the first insulating member 2122. The first reinforcing member 2122c may be located around the first through hole 109a and close to the first through hole 109a.

The first reinforcing member 2122c may be configured as a reinforcing rib, so that the first reinforcing member 2122c can improve the structural strength of the first insulating member 2122. Particularly, the first reinforcing member 2122c can improve the structural strength of a region around the first through hole 109a on the first insulating member 2122. Therefore, when the ejector pin pushes against the region around the first through hole 109a on the first insulating member 2122 to complete demolding, a deformation amount of the region around the first through hole 109a on the first insulating member 2122 can be reduced, so as to facilitate ejecting the first insulating member 2122, thereby improving the demolding efficiency of the first insulating member 2122.

The second insulating member 2123 may be provided with a second through hole 109b. The second through hole 109b may be a through hole right opposite to the liquid injection hole. The second through hole 109b may run through the second insulating member 2123 in a thickness direction of the second insulating member 2123. The second reinforcing member 2123c is disposed on the second insulating member 2123. The second reinforcing member 2123c may be disposed on at least one of two sides of the second insulating member 2123 in the thickness direction. The second reinforcing member 2123c may alternatively protrude from a surface of the second insulating member 2123. The second reinforcing member 2123c may be located around the second through hole 109b and close to the second through hole 109b.

The second reinforcing member 2123c may be configured as a reinforcing rib, so that the second reinforcing member 2123c can improve the structural strength of the second insulating member 2123. Particularly, the second reinforcing member 2123c can improve the structural strength of a region around the second through hole 109b on the second insulating member 2123. Therefore, when the ejector pin pushes against the region around the second through hole 109b on the second insulating member 2123 to complete demolding, a deformation amount of the region around the second through hole 109b on the second insulating member 2123 can be reduced, so as to facilitate ejecting the second insulating member 2123, thereby improving the demolding efficiency of the second insulating member 2123.

In some embodiments of the present application, a plurality of first reinforcing members 2122c are configured, and the plurality of first reinforcing members 2122c are disposed at intervals along a peripheral direction of the first through hole 109a. Machining the first through hole 109a in the first insulating member 2122 may cause the strength of the region around the first through hole 109a on the first insulating member 2122 to be worse. Therefore, by disposing the plurality of first reinforcing members 2122c at intervals along the peripheral direction of the first through hole 109a, not only the structural strength of the region around the first through hole 109a on the first insulating member 2122 can be improved, but also the structural strength of the region around the first through hole 109a on the first insulating member 2122 can tend to be consistent.

In some embodiments of the present application, the first reinforcing member 2122c is an arc-shaped reinforcing rib. Compared with a straight reinforcing rib, the arc-shaped reinforcing rib can better improve the structural strength around the first through hole 109a on the first insulating member 2122, so that when the ejector pin pushes against the region around the first through hole 109a on the first insulating member 2122 to complete demolding, the deformation amount of the region around the first through hole 109a on the first insulating member 2122 can be reduced, so as to facilitate ejecting the first insulating member 2122, thereby improving the demolding efficiency of the first insulating member 2122.

According to some embodiments of the present application, because the first reinforcing member 2122c is an arc-shaped reinforcing rib rather than an annular reinforcing rib, the arc-shaped reinforcing rib has a first opening, and the first opening may be disposed away from the first through hole 109a. That is, the arc-shaped reinforcing rib protrudes toward a direction of the first through hole 109a, thereby further improving the structural strength of the region around the first through hole 109a on the first insulating member 2122.

In some embodiments of the present application, a plurality of second reinforcing members 2123c are configured, and the plurality of second reinforcing members 2123c are disposed at intervals along a peripheral direction of the second through hole 109b. Machining the second through hole 109b in the second insulating member 2123 may cause the strength of the region around the second through hole 109b on the second insulating member 2123 to become worse. Therefore, by disposing the plurality of second reinforcing members 2123c at intervals along the peripheral direction of the second through hole 109b, not only the structural strength of the region around the second through hole 109b on the second insulating member 2123 can be improved, but also the structural strength of the region around the second through hole 109b on the second insulating member 2123 can tend to be consistent.

In some embodiments of the present application, the second reinforcing member 2123c is an arc-shaped reinforcing rib. Compared with a straight-shaped reinforcing rib, the arc-shaped reinforcing rib can better improve the structural strength around the second through hole 109b on the second insulating member 2123, so that when the ejector pin pushes against the region around the second through hole 109b on the second insulating member 2123 to complete demolding, the deformation amount of the region around the second through hole 109b on the second insulating member 2123 can be reduced, so as to facilitate ejecting the second insulating member 2123, thereby improving the demolding efficiency of the second insulating member 2123.

According to some embodiments of the present application, because the second reinforcing member 2123c is an arc-shaped reinforcing rib rather than an annular reinforcing rib, the arc-shaped reinforcing rib has a second opening, and the second opening may be disposed away from the second through hole 109b. That is, the arc-shaped reinforcing rib protrudes toward a direction of the second through hole 109b, thereby further improving the structural strength of the region around the second through hole 109b on the second insulating member 2123.

In some embodiments of the present application, the first reinforcing member 2122c is at least partially located between the first through hole 109a and the first receiving area 107. That is, one part of the first reinforcing member 2122c may be located between the first through hole 109a and the first receiving area 107, and the other part of the first reinforcing member 2122c is located only at an outer periphery of the first receiving area 107. Alternatively, the entirety of the first reinforcing member 2122c may be located between the first through hole 109a and the first receiving area 107. Therefore, not only the structural strength of the region around the first receiving area 107 can be increased, but also the structural strength of the region around the first through hole 109a can be increased.

In some embodiments of the present application, the second reinforcing member 2123c is at least partially located between the second through hole 109b and the second receiving area 108. That is, one part of the second reinforcing member 2123c may be located between the second through hole 109b and the second receiving area 108, and the other part of the second reinforcing member 2123c is located only at an outer periphery of the second receiving area 108. Alternatively, the entirety of the second reinforcing member 2123c may be located between the second through hole 109b and the second receiving area 108. Therefore, not only the structural strength of the region around the second receiving area 108 can be increased, but also the structural strength of the region around the second through hole 109b can be increased.

A battery cell according to an embodiment of the present application is described below.

The battery cell according to this embodiment of the present application includes the foregoing end cover 212. Because the battery cell according to this embodiment of the present application is provided with the foregoing end cover 212, a damage rate of the battery cell is reduced, and a service life of the battery cell is improved.

The battery cell 20 further includes a case 211 and an electrode assembly 22. The case 211 has an open port, and the end cover 212 closes the open port. The end cover 212 and the case 211 form an accommodating chamber (not shown) for accommodating the electrode assembly 22.

The battery cell according to the present application may further include an insulating film (not shown). The insulating film wraps the electrode assembly 22. The insulating film may be configured to include a bag structure with an open top. The open port of the insulating film may facilitate welding between the tab and the terminal post. One end of the insulating film may be connected with the first insulating member 2122 and/or the second insulating member 2123, and one end of the insulating film formed with the open port may be connected with the first insulating member 2122 and/or the second insulating member 2123. For example, the end of the insulating film formed with the open port may be bonded to the first insulating member 2122 and/or the second insulating member 2123, or the end of the insulating film formed with the open port may be hot-melted with the first insulating member 2122 and/or the second insulating member 2123. Therefore, the insulating film, the first insulating member 2122, and the second insulating member 2123 together isolate the electrode assembly from a shell and the cover body 2121, thereby improving the safety performance of the battery cell, and reducing the probability of occurrence of a short circuit or electric leakage.

A battery 100 according to an embodiment of the present application is described below.

The battery 100 according to this embodiment of the present application includes the foregoing battery cell 20. Because the battery 100 according to this embodiment of the present application is provided with the foregoing battery cell 20, maintenance costs of the battery 100 are reduced, and a service life of the battery is also improved.

A power consuming device according to an embodiment of the present application is described below.

The power consuming device according to this embodiment of the present application includes the foregoing battery 100. Because the power consuming device according to this embodiment of the present application is provided with the foregoing battery 100, maintenance costs of the power consuming device are reduced, and a service life of the power consuming device is improved.

The above descriptions are merely preferred embodiments of the present application and are not intended to limit the present application. For those skilled in the art, the present application may have various modifications and changes. Any modification, equivalent replacement, or improvement made without departing from the spirit and principle of the present application shall fall within the protection scope of the present application.

## Claims

1. An end cover, comprising:
a cover body;
a first insulating member, fixedly connected to the cover body, wherein one end of the first insulating member forms a first connecting end; and
a second insulating member, fixedly connected to the cover body, wherein one end of the second insulating member forms a second connecting end,
wherein the first connecting end and the second connecting end are oppositely disposed and fixedly connected to each other.

2. The end cover according to claim 1, wherein:
the first insulating member and the second insulating member are arranged in a first direction;
the first insulating member has a first fixing portion fixedly connected with the cover body, wherein a part of the first insulating member located between the first fixing portion and the first connecting end is configured as a first suspended section, wherein in the first direction, a maximum size of the first suspended section is a₁, and a minimum thickness of the first suspended section is t₁, wherein 40 ≤ a₁/t₁≤ 2100; and/or
the second insulating member has a second fixing portion connected with the cover body, wherein a part of the second insulating member located between the second fixing portion and the second connecting end is configured as a second suspended section, wherein in the first direction, a maximum size of the second suspended section is a₂, and a minimum thickness of the second suspended section is t₂, wherein 40 ≤ a₂/t₂≤ 2100.

3. The end cover according to claim 2, wherein 60 ≤ a₁/t₁≤ 1500, and/or 60 ≤ a₂/t₂≤ 1500.

4. The end cover according to any one of claims 1 to 3, wherein the first connecting end and the second connecting end are detachably connected to each other.

5. The end cover according to claim 4, wherein the first connecting end and the second connecting end are snap-fitted to each other.

6. The end cover according to claim 5, wherein the first connecting end is provided with a first fitting portion, and the second connecting end is provided with a second fitting portion,
wherein the first fitting portion is provided with a snap-fit hole, and the second fitting portion is configured as an elastic member, wherein a size of a free end of the second fitting portion is greater than a size of the snap-fit hole, so that the free end of the second fitting portion is snap-fitted with the first fitting portion after passing through the snap-fit hole.

7. The end cover according to claim 6, wherein the first connecting end is provided with a first protruding block, wherein the first protruding block protrudes toward a direction away from the cover body, and the first fitting portion is disposed on the first protruding block.

8. The end cover according to claim 7, wherein:
the first insulating member is further provided with a second protruding block, wherein the second protruding block protrudes toward a direction away from the cover body; and
the second insulating member is provided with a third protruding block, wherein the third protruding block protrudes toward a direction away from the cover body.

9. The end cover according to any one of claims 1 to 8, wherein the first connecting end and the second connecting end are fixed to each other through bonding.

10. The end cover according to any one of claims 1 to 9, wherein the first connecting end and the second connecting end are fixed to each other by a fastener.

11. The end cover according to claim 2 or 3, wherein:
the end cover comprises a first electrode terminal and a second electrode terminal, wherein the first electrode terminal and the second electrode terminal are both mounted at the cover body; and
the first insulating member is provided with a first via hole for the first electrode terminal to pass through, and the second insulating member is provided with a second via hole for the second electrode terminal to pass through, wherein a region on an inner side wall of the first via hole being closest to the first connecting end is configured as the first fixing portion, and a region on an inner side wall of the second via hole being closest to the second connecting end is configured as the second fixing portion.

12. The end cover according to any one of claims 1 to 11, wherein:
the first insulating member is provided with a first receiving area for receiving an acting force, and the first insulating member is provided with a first reinforcing member, wherein the first reinforcing member is at least partially disposed around the first receiving area; and/or
the second insulating member is provided with a second receiving area for receiving an acting force, and the second insulating member is provided with a second reinforcing member, wherein the second reinforcing member is at least partially disposed around the second receiving area.

13. The end cover according to claim 12, wherein:
the first insulating member is provided with a first through hole, wherein the first reinforcing member is located at an outer periphery of the first through hole; and
the second insulating member is provided with a second through hole, wherein the second reinforcing member is located at an outer periphery of the second through hole.

14. The end cover according to claim 13, wherein:
a plurality of first reinforcing members are provided, wherein the plurality of first reinforcing members are disposed at intervals along a peripheral direction of the first through hole; and
a plurality of second reinforcing members are provided, wherein the plurality of second reinforcing members are disposed at intervals along a peripheral direction of the second through hole.

15. The end cover according to claim 13 or 14, wherein:
the first reinforcing member is arc-shaped and has a first opening, wherein the first opening faces away from the first through hole; and
the second reinforcing member is arc-shaped and has a second opening, wherein the second opening faces away from the second through hole.

16. The end cover according to any one of claims 13 to 15, wherein the first reinforcing member is at least partially located between the first through hole and the first receiving area, and the second reinforcing member is at least partially located between the second through hole and the second receiving area.

17. A battery cell, comprising the end cover according to any one of claims 1 to 16.

18. The battery cell according to claim 17, wherein:
the battery cell further comprises a case and an electrode assembly, wherein the case has an open port, wherein the end cover closes the open port, and the end cover and the case form an accommodating chamber for accommodating the electrode assembly; and
the battery cell further comprises an insulating film, wherein the insulating film wraps the electrode assembly, and one end of the insulating film is connected with the first insulating member and/or the second insulating member.

19. A battery, comprising the battery cell according to claim 17 or 18.

20. A power consuming device, comprising the battery according to claim 19.
